# EUROPÄISCHE PATENTANMELDUNG

(11) **EP 2 384 915 A1**
(43) Veröffentlichungstag der Anmeldung: **09.11.2011**
(21) Anmeldenummer: 11153946.6
(22) Anmeldetag: 10.02.2011
(51) Int. Cl.: B60G 15/06

(54) **Federbeinlager mit einer Federaufnahme und einer Aufnahme für einen Anschlagpuffer**

(30) Priorität: 15.03.2010 DE 102010011423
(71) Anmelder: Schaeffler Technologies GmbH & Co. KG, 91074 Herzogenaurach (DE)
(72) Erfinder: Stautner, Ralf, 90473, Nürnberg (DE); Wöllner, Andreas, 90425, Nürnberg (DE)

(57) **Zusammenfassung**

Die Erfindung betrifft ein Federbeinlager mit einer Federauflage an einem Gehäuseteil aus Kunststoff und einer napfförmigen Aufnahme für einen Anschlagpuffer, wobei die napfförmige Aufnahme in axialer Richtung zumindest teilweise in das Gehäuseteil hineingesteckt und radial geführt an dem Gehäuseteil gehalten ist.

## Beschreibung

### Gebiet der Erfindung

Die Erfindung betrifft ein Federbeinlager mit einer Federauflage an einem Gehäuseteil aus Kunststoff und einer napfförmigen Aufnahme für einen Anschlagpuffer, wobei die napfförmige Aufnahme in axialer Richtung zumindest teilweise in das Gehäuse hineingesteckt und radial geführt an dem Gehäuse gehalten ist.

### Hintergrund der Erfindung

Aus DE 103 59 638 B3 ist ein derartiges Federbeinlager bekannt, das aus einem oberen Gehäuseteil, einem unteren Gehäuseteil und einem von dem unteren und dem oberen Gehäuseteil gekapselten Wälzlager gebildet ist. Das obere Gehäuseteil ist karosserieseitig und das untere Gehäuseteil ist fahrbahnseitig ausgerichtet. Dementsprechend stützt sich an dem unteren Gehäuseteil die Schraubenfeder des Federbeins ab.

Federbeinlager sind Axiallager, da die Hauptbelastungsrichtungen der fahrzeugseitigen Belastung gegen die Federkräfte vorwiegend axiale, also mit der Schwenkachse des Federbeinlagers gleichgerichtete Richtungen, sind. Unabhängig davon sind jedoch Federbeinlager oft zusätzlich durch Radialkraftkomponenten radial, also quer zur Schwenkachse des Federbeinlagers, belastet. Diese Radialkraftkomponenten werden zum Beispiel hervorgerufen, wenn die Mittelachse der Schraubenfeder und die Schwenkachse des Federbeinlagers nicht übereinstimmen. Darüber hinaus ist der Krafteintrag der Federkräfte an der Federauflage in das untere Gehäuseteil nicht gleichmäßig, welcher beispielsweise von der Lage des Endes der Schraubenfeder und deren Verwindungscharakteristik beim Einfedern abhängig sein kann. Bei harten Schlägen auf das Fahrwerk kann die Schraubenfeder soweit einfedern, dass der Anschlagpuffer zum Tragen kommt. Dieser auch am unteren Gehäuse des Federbeinlagers in der Aufnahme aufgenommene Anschlagpuffer ist ein beliebig gestalteter Gummiklotz, der in der Fachwelt auch als Bump-Stop bezeichnet wird. Die durch den Bump-Stop aufgenommenen Stöße mit Kraftspitzen von durchaus bis zu 60kN werden im Extremfall zumindest teilweise auch in das untere Gehäuse des Federbeinlagers eingeleitet.

Die zuvor genannten Einflüsse führen dazu, dass die Belastungen nicht gleichmäßig am Umfang des Federbeinlagers eingeleitet werden. Im Federbeinlager gibt es deshalb hoch- und weniger hoch belastete Zonen, deren Lage Fahrzeugkonstrukteur in Abhängigkeit vom Fahrzeugtyp bekannt ist. In der Vergangenheit ist die Fachwelt, wie in DE 103 59 638 B3 auch beschrieben ist, aus Kostengründen zunehmend dazu übergegangen, Federauflagen aus Metall durch untere Gehäuseteile aus Kunststoffen zu ersetzen. In die Gehäuseteile sind die Federauflage und eine Halterung/Aufnahme für den Bump-Stop integriert. Die höheren Elastizitätsmodule der Gehäuseteile aus Kunststoff können dazu führen, dass sich derartige ungleichmäßige Belastungen weit mehr als bisher auf ungleichmäßige Verteilungen der Belastungen im Federbeinlager auswirken.

Die hohen Belastungen führen deshalb oftmals dazu, dass der Fachmann auf geeignete Maßnahmen wie auf den Einsatz von Armierungen aus Blech am unteren Gehäuseteil zurückgreifen musste um unzulässige Verformungen zu vermeiden. Derartige Maßnahmen führen zur Erhöhung der Herstellkosten und heben damit die durch Einsatz von Kunststoff erzielbaren Kostenvorteile zumindest teilweise wieder auf. Darüber hinaus können sich die Sitze der Aufnahmen der Bump-Stop aus Metall aufgrund der Belastungen und der unterschiedlichen Wärmeausdehnungskoeffizienten in den Gehäuseteilen aus Kunststoff lockern.

Die ungleichmäßigen Belastungen veranlassen den Fachmann dazu, die höher belasteten Zonen des unteren Gehäuseteils partiell durch geeignete konstruktiven Maßnahmen anders zu gestalten als die anderen. Durch diese teils nicht offensichtlichen Maßnahmen müssen die Federbeinlager richtungs- bzw. lageorientiert eingebaut werden. Darüber hinaus kann eine lageorientierte Montage bzw. Positionierung auch aufgrund anderer Gegebenheiten der Anordnung, wie zum Beispiel aufgrund der Lage des Endes der letzten Windung der Schraubenfeder, erforderlich sein. Weiterhin kann eine lageorientierte Ausrichtung für automatisierte Montagen erforderlich sein.

### Aufgabe der Erfindung

Die Aufgabe der Erfindung ist es daher, ein Federbeinlager der gattungsbildenden Art zu schaffen, das einfach und kostengünstig herstellbar ist. Darüber hinaus soll die Lage und Position der einzelnen Bauteile, insbesondere der Aufnahme des Anschlagpuffers in dem Federbeinlager, über die gesamte Lebensdauer des Fahrzeugs betriebssicher gewährleistet sein. Weiterhin soll eine lageorientierte Ausrichtung des Federbeinlagers bei der Montage abgesichert werden.

### Beschreibung der Erfindung

Diese Aufgabe ist nach dem Gegenstand des Anspruchs 1 gelöst.

Das Federbeinlager weist einer Federauflage an einem Gehäuseteil der Federbeinlagers auf. Die Federauflage ist für die Auflage der letzten Windung der Schraubenfeder eines Federbeins vorgesehen. Das Gehäuseteil ist aus Kunststoff.

Die beiden entgegengesetzten axialen Richtungen sind mit der Schwenkachse des Federbeinlagers gleichgerichtete Richtungen. Radiale Richtungen sind beliebige von der Schwenkachse senkrecht abgehende Richtungen.

Das Gehäuseteil ist das untere Gehäuseteil des Federbeinlagers, dem ein oberes Gehäuseteil zugeordnet ist. Zwischen den Gehäuseteilen ist wahlweise ein Wälzlager oder ein Gleitlager axial angeordnet, so dass diese ein gemeinsames Gehäuse bilden und damit das Wälz- oder Gleitlager einkapseln. Es ist auch denkbar, dass zusätzlich zu dem Axiallager eine radiale Lagerkomponente in Form eines Gleitlagers oder eines Wälzlager in dem Gehäuse angeordnet ist.

Das Federbeinlager ist vorwiegend als Axiallager ausgelegt und ist ein Schwenklager, durch das Zwangsbewegungen (Verwindungen) an der Auflage der Karosserie zwischen dieser und dem Federbein durch Verschwenken der beiden Gehäuseteile möglichst reibungsfrei sind.

Eine napfförmigen Aufnahme für einen Anschlagpuffer sitzt in dem Gehäuse. Die napfförmige Aufnahme weist einen gelochten und sich im wesentlichen in radiale Richtung erstreckenden Boden und eine Seitenwand auf, die vorwiegend in eine axiale Richtung von dem Boden abgeht. Der Boden ist vorzugsweise ringscheibenförmig ausgebildet. Der Boden kann alternativ auch gewölbt oder mit Sicken oder beliebig anders geformt sein. Die Aufnahme ist vorzugsweise ein kalt geformtes Bauteil aus Blech, insbesondere aus Stahlblech. Die Seitenwand ist vorzugsweise hohlzylindrisch ausgebildet, kann aber auch beliebig anders gestaltete Querschnitte aufweisen und mit Sicken oder anderen Formelementen versehen sein. An der Öffnung der napfförmigen Aufnahme geht von der Seitenwand mindestens ein Rand ab, mit dem die Aufnahme beispielsweise zur Karosserie hin an dem unteren Gehäuseteil abgestützt sein kann.

Das untere Gehäuseteil weist fahrbahnseitig eine axial gerichtet verlaufende Öffnung auf, in welche die Aufnahme mit dem Boden voran eingesetzt ist. Die Aufnahme ist mindestens soweit in das untere Gehäuse hinein gesteckt, dass ein Teil ihrer Seitenwand um die Schwenkachse herum von dem Material des unteren Gehäuseteils zumindest teilweise umgeben ist.

Damit sich der Sitz der Aufnahme trotz hoher Belastungen und unterschiedlicher Wärmedehnung der Komponenten in dem unteren Gehäuseteil nicht lockern kann, sind erfindungsgemäß an dem Gehäuseteil einzelne Halteelemente ausgebildet. Die Halteelemente sind um die Aufnahme herum angeordnet. Die Aufnahme ist durch die Halteelemente in zumindest einer axialen Richtung formschlüssig hintergriffen und so in dem unteren Gehäuseteil gesichert. Die Halteelemente halten die Aufnahme entweder im Zusammenwirken mit einem Rand in der Durchgangsöffnung oder sichern die Aufnahme in beide axiale Richtungen an dem Gehäuse. Damit sich die Aufnahme einfach und mit geringem Widerstand in das untere Gehäuseteil einsetzen lässt, sind um die Schwenkachse herum mehrere einzelne der Halteelemente mit Abstand zueinander angeordnet.

Eine Ausgestaltung der Erfindung sieht vor, dass die Aufnahme um die Schwenkachse herum mit Abstand zueinander in die Seitenwand der Aufnahme eingebrachte Fenster aufweist. Die Fenster sind radial gerichtete Durchgangslöcher beliebigen Querschnitts. In jedes der Fenster greift jeweils mindestens eines der Halteelemente formschlüssig radial ein und hintergreift somit die Seitenwand in mindestens eine Richtung an mindestens einer Kante des Fensters. Durch eine derartige Anordnung der formschlüssigen Verbindung ist eine sichere und insbesondere in axiale Richtungen raumsparende Lösung geschaffen.

Die Erfindung zeichnet sich weiter dadurch aus, dass das Gehäuseteil mindestens einen ersten Typ radial nachgiebiger und einen zweiten Typ radial starrer Halteelemente aufweist. Beide Typen der Halteelemente am unteren Gehäuseteil ragen in Form von radialen Vorsprüngen radial in die Öffnung des unteren Gehäuseteils hinein und sind damit der Aufnahme beim Einsetzen in die Öffnung zunächst im Wege.

Radial nachgiebig heißt, dass die Halteelemente des ersten Typs beim Einsetzen der Aufnahme in das untere Gehäuseteil radial elastisch soweit auffedern, dass diese zwischen den Halteelementen des ersten Typs und des zweiten Typs solange hindurch geschoben werden kann, bis die Halteelemente beider Typen auf die ihre vorbestimmten Fenster treffen und in diesen verrasten.

Halteelemente des starren Typs sind Halteelemente, die verglichen mit den Halteelementen des radial nachgiebigen Typs radial nicht oder kaum merklich nachgeben, die beim Einschieben der Aufnahme in die Öffnung deshalb abscheren könnten oder mit geringer radialer Überdeckung zur Aufnahme ausgelegt sein müssten. Zu geringe Überdeckung könnte jedoch bei alleiniger Verwendung von Halteelementen des zweiten Typs dazu führen, dass der Sitz sich bei unterschiedlicher Wärmedehnung der Bauteile lockert. Die Erfindung sieht jedoch eine Kombination von ersten Typen und zweiten Typen der Halteelemente vor die um die Schwenkachse herum so verteilt sind, das die Halteelemente des ersten Typs bei Montage der Aufnahme radial ausreichend genug ausweichen um auch den radialen Überstand der starren Halteelemente zu kompensieren.

Mit einer Ausgestaltung der Erfindung ist vorgesehen, dass die Halteelemente des ersten Typs jeweils durch mindestens eine Schnappnase gebildet sind, die zumeist endseitig an einem elastisch nachgiebigen Hebel ausgebildet ist. Die jeweilige Schnappnase ist mittels des einseitig an dem Gehäuse festen Hebels elastisch nachgiebig mit dem Gehäuseteil verbunden. Hebel und Schnappnase sind vorzugsweise aus dem gleichen Material wie das untere Gehäuseteil und mit diesem einteilig ausgebildet. Damit der Hebel und damit die jeweilige Schnappnase in radiale Richtungen elastisch um den notwendigen Weg frei einfedern können, ist dieser gegenüber dem weiteren Material des Gehäuses in Richtung um die Schwenkachse herum und in radiale Richtung zwischen Hebel und Gehäuse sowie zwischen Schnappnase und Gehäuse freigemacht.

Freigemacht heißt, dass in die genannten Richtungen zwischen dem Hebel bzw. der Schnappnase und dem Material des Gehäuses ein Luftspalt ausgebildet. In radiale Richtungen muss der Luftspalt zumindest unter Berücksichtigung aller Toleranzen mindesten so groß sein, dass die jeweilige Schnappnase funktionsgemäß einfedern kann. Alternativ ist die Schnappnase radial völlig von dem Gehäuse frei. Der jeweilige in die Richtungen um die Schwenkachse herum gerichtete Luftspalt kann beliebig schmal oder breit ausgelegt sein, weil dieser nur die radiale Beweglichkeit des jeweiligen Hebels mit Schnappnase absichern soll.

Der Vorteil der Erfindung liegt darin, dass im Sitz der Aufnahme im Gehäuseteil mittels der formschlüssigen Verbindung zwischen Halteelementen und der Aufnahme und damit zwischen dem unteren Gehäuseteil und der Aufnahme auch bei hohen Belastungen und bei großem Spiel ausreichend radiale Überdeckung für sicheren Halt gewährleistet werden kann.

Wie schon im Kapitel "Hintergrund der Erfindung" beschrieben, sind Federbeinlager nicht in jedem Fall gleichmäßig belastet. Es gibt auf dem Umfang verteilt betrachtete Zonen höherer Belastungen und geringerer Belastung. Der Vorteil einer Kombination von Halteelementen nachgiebig elastischen Typs und starren Typs liegt darin, dass die Halteelemente des zweiten Typs in den Zonen des Gehäuseteils ausgebildet sind, die hohen Belastungen ausgesetzt sind. Da diese lediglich als radiale Vorsprünge aus dem Material des Gehäuseteils hervorstehen, ist die massive Struktur des unteren Gehäuseteils nicht geschwächt.

Die elastisch nachgiebige Ausbildung der Halteelemente des ersten Typs führt zwangsläufig dazu, dass das untere Gehäuseteil in diesen Bereichen geschwächt ist, Die Halteelemente des ersten Typs sind deshalb in Zonen des unteren Gehäuseteils angeordnet, die weniger durch hohe Belastungen beeinflusst sind.

Eine Ausgestaltung der Erfindung sieht vor, dass die Aufnahme wenigstens ein Lageorientierungsmittel zum orientierten Einbau der Aufnahme in das Gehäuseteil aufweist. Dies kann insbesondere dann sinnvoll sein, wenn das Haltemittel oder das untere Gehäuseteil nicht symmetrisch ausgebildet sind und eine orientierte Montage erforderlich wird. Es ist diesbezüglich weiter vorgesehen, dass das Lageorientierungsmittel an einem Typ der Halteelemente orientiert ist. Das ist insbesondere von Vorteil, wenn die Aufnahme ohnehin aus verschiedensten Gründen ein Lageorientierungsmittel zur gerichteten Montage des Federbeins in eine Federbeinanordnung aufweisen muss. So kann z.B. mit einer derartigen lageorientierten Montage sichergestellt werden, dass das Federbeinlager mit den Halteelementen des zweiten Typs in die Zonen mit der höheren Belastungen und mit den Halteelementen des ersten Typs in die Zonen mit geringerer Belastung ausgerichtet ist.

Das Lageorientierungsmittel ist wahlweise unsichtbar (beispielsweise magnetisch) oder sichtbar und vorzugsweise durch mindestens eine quer zur axialen Richtung verlaufende Abflachung an der napfförmigen Aufnahme gebildet. So können sich zwei der Abflachungen parallel gegenüberliegen.

### Beschreibung der Zeichnungen

### Kurze Beschreibung der Zeichnung

Die Erfindung wird nachfolgend anhand eines Ausführungsbeispiels näher erläutert. Es zeigen:
- Figur 1: eine perspektivische Gesamtansicht eines Federbeinlagers,
- Figur 2: einen Längsschnitt durch das Federbeinlager nach Figur 1 entlang der Schwenkachse des Federbeinlagers,
- Figur 3: die Ansicht X auf das Federbeinlager nach Figur 1,
- Figur 4: eine perspektivische Gesamtansicht des unteren Gehäuseteils des Federbeinlagers nach Figur 1,
- Figur 5: die Ansicht Y auf das untere Gehäuseteil nach Figur 4,
- Figur 6: einen Längsschnitt entlang der Linie VI - VI aus Figur 5 des unteren Gehäuseteils,
- Figur 7: eine perspektivische Gesamtansicht der Aufnahme des Federbeinlagers nach Figur 1 und
- Figur 8: eine Schnittdarstellung der Aufnahme nach Figur 7, in einer Ebene quer zur Schwenkachse geschnitten.

### Ausführliche Beschreibung der Zeichnung

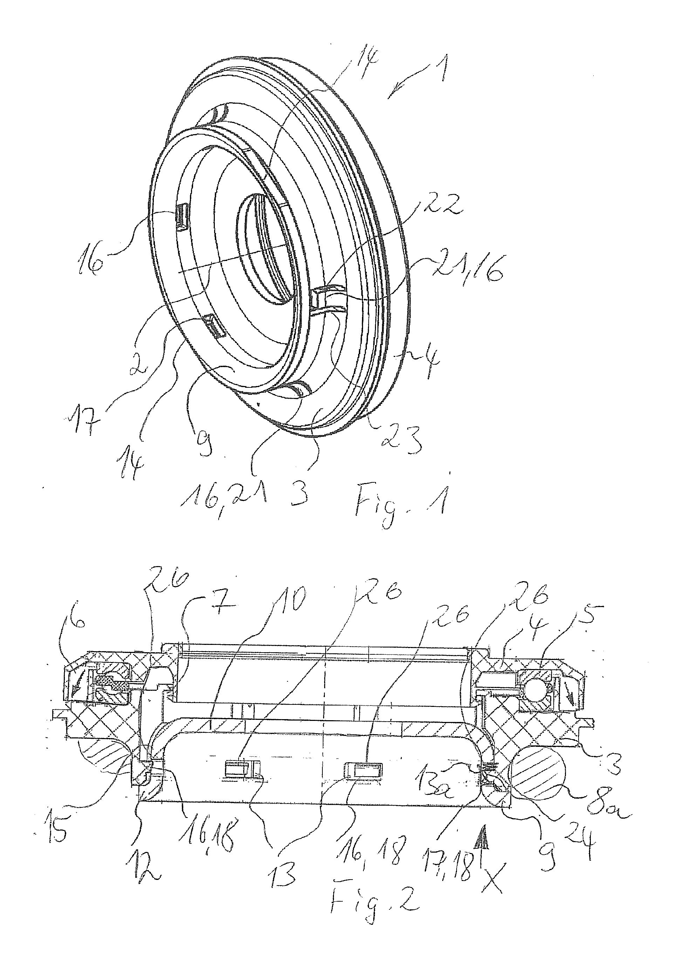

Figuren 1 und 2: Figur 1 zeigt eine perspektivische Gesamtansicht eines Federbeinlagers 1, das in Figur 2 in einem Längsschnitt entlang der Schwenkachse 2 des Federbeinlagers 1 abgebildet ist. Mit einem unteren Gehäuseteil 3 ist ein oberes Gehäuseteil 4 verschnappt. Zwischen den Gehäuseteilen 3 und 4 ist ein Wälzlager 5 axial angeordnet, welches radial nach außen durch eine Dichtung 6 und radial nach innen durch eine Dichtung 7 gedichtet ist. Das Federbeinlager 1 weist einer Federauflage 8 an dem unteren Gehäuseteil 3 für die Auflage auf einer nur andeutungsweise dargestellten letzten Windung 8a einer Schraubenfeder eines nicht dargestellten Federbeins vorgesehen. Die Schwenkachse 2 des Federbeinlagers 1 ist axial ausgerichtet. Eine napfförmige Aufnahme 9 für einen nicht dargestellten Anschlagpuffer sitzt in dem unteren Gehäuse 3.

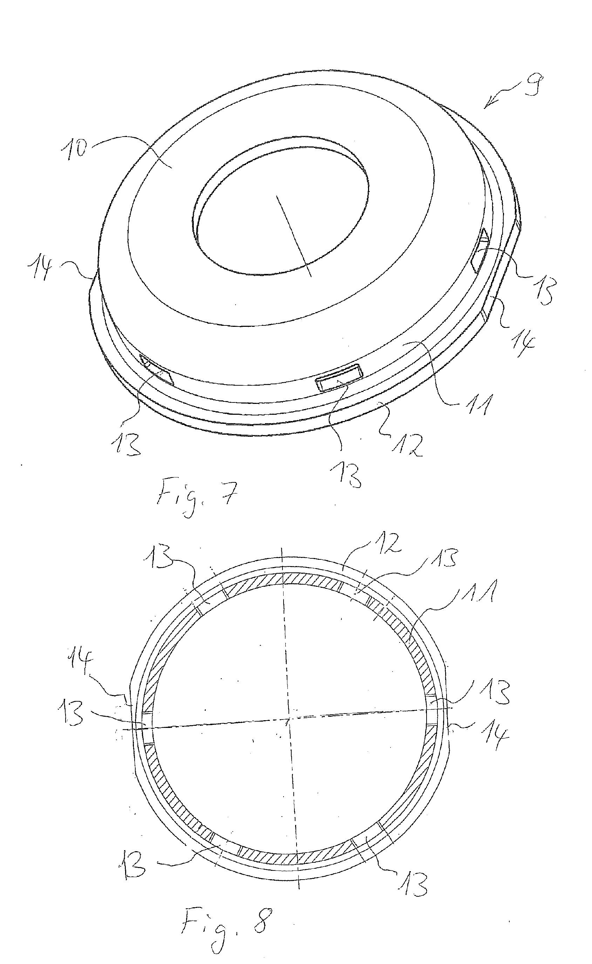

Figuren 7 und 8: Die napfförmige Aufnahme 9 ist in Figur 7 in einer perspektivischen Gesamtansicht dargestellt und weist einen gelochten und sich im wesentlichen in radiale Richtung erstreckenden Boden 10 und eine Seitenwand 11 auf. An der Öffnung der napfförmigen Aufnahme 9 geht von der Seitenwand 11 mindestens ein Rand 12 ab, der insbesondere aus den Figuren 7 und 8 ersichtlich ist. Figur 8 zeigt eine Schnittdarstellung der Aufnahme 9 nach Figur 7, in einer Ebene quer zur Schwenkachse 2 geschnitten. Die Aufnahme 9 weist umfangsseitig um die Schwenkachse 2 herum mit Abstand zueinander in die Seitenwand 11 eingebrachte Fenster 13 auf. Die Fenster 13 sind radial gerichtete Durchgangslöcher rechteckigen Querschnitts.

Die Aufnahme 9 weist ein Lageorientierungsmittel zum orientierten Einbau der Aufnahme 9 in das untere Gehäuseteil 3 auf. Das Lageorientierungsmittel ist durch zwei parallele zur axialen Richtung quer verlaufende Abflachungen 14 an dem Rand 12 der Aufnahme 9 gebildet. Es liegen sich zwei der Abflachungen 14 parallel gegenüber.

Figur 2: Das untere Gehäuseteil 3 weist eine axial gerichtet verlaufende Öffnung 15 auf, in welche die Aufnahme 9 mit dem Boden 10 voran eingesetzt ist. Die Aufnahme 9 ist soweit in das untere Gehäuseteil 3 hinein gesteckt, dass ihre Seitenwand 11 um die Schwenkachse 2 herum von dem Material des unteren Gehäuseteils 3 umgeben ist. Außerdem ist die Aufnahme 9 mittels des Rands 12 an dem unteren Gehäuseteil 3 axial abgestützt.

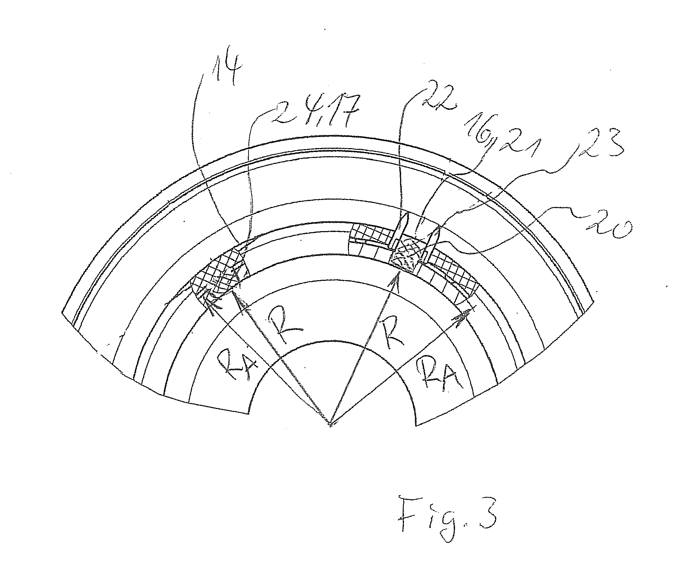

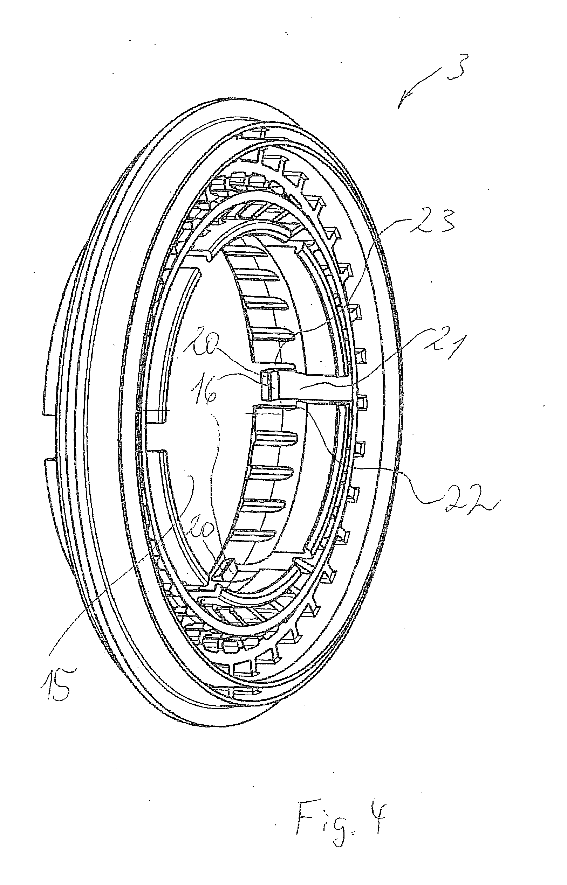

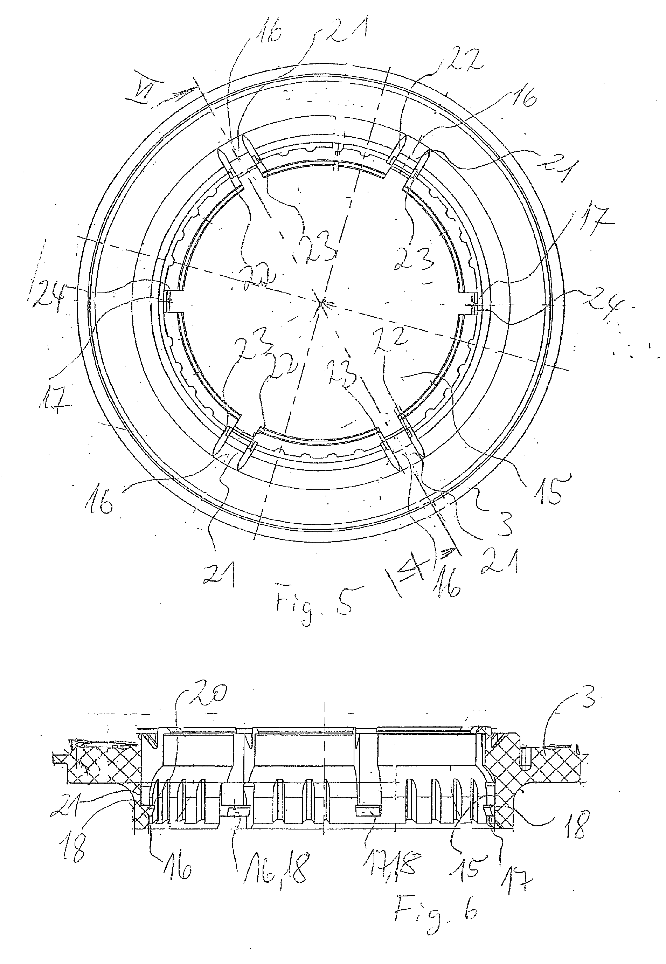

Figuren 3, 4, 5 und 6: Figur 4 zeigt eine perspektivische Gesamtansicht des unteren Gehäuseteils 3. Figur 5 zeigt die Ansicht Y auf das untere Gehäuseteil 3 nach Figur 4 und Figur 6 zeigt einen Längsschnitt entlang der Linie VI - VI aus Figur 5 des unteren Gehäuseteils 3. An dem unteren Gehäuseteil 3 sind einzelne Halteelemente 16 und 17 ausgebildet.

Ein erster Typ Halteelemente 16 ist radial nachgiebig gestaltet. Ein zweiter Typ Halteelemente 17 ist starr. Beide Typen der Halteelemente 16 und 17 ragen am unteren Gehäuseteil 3 in Form von radialen Vorsprüngen 18 radial in die Öffnung 15 des unteren Gehäuseteils 3 hinein und sind der Aufnahme 9 beim Einsetzen in die Öffnung 15 im Wege, weil der radiale Abstand R der Innenkanten 19 der jeweiligen Vorsprünge 18 zur Schwenkachse 2 kleiner ist als der Außendurchmesser D_{A} der Aufnahme 9 bzw. der Führungsdurchmesser D_{A} in der kreisrunden Öffnung 15 (Figur 3).

Die ersten Typen Halteelemente 16 und zweiten Typen Halteelemente 17 sind hinsichtlich ihre Anzahl im Verhältnis 1: 2 ausgebildet und so um die Schwenkachse 3 herum verteilt, dass sich in diesem Fall zwei Halteelemente 17 des starren Typs an der Schwenkachse 3 gegenüber liegen und umfangsseitig jeweils zwei zueinander benachbarte elastisch nachgiebige Halteelemente 16 mit gleichmäßigen Abständen zueinander dazwischen.

Die Halteelemente 16 des ersten Typs jeweils durch mindestens eine Schnappnase 20 gebildet, die endseitig an einem elastisch nachgiebigen Hebel 21 ausgebildet ist. Die jeweilige Schnappnase 20 ist mittels des einseitig an dem unteren Gehäuseteil 3 festen Hebels 21 elastisch nachgiebig mit dem unteren Gehäuseteil 3 verbunden. Damit der Hebel 21 und damit die jeweilige Schnappnase 20 in radiale Richtungen elastisch um den notwendigen Weg frei einfedern können, ist dieser gegenüber dem weiteren Material des unteren Gehäuseteils 3 in Richtung um die Schwenkachse 2 herum zwischen Hebel 21 und Gehäuseteil 3 sowie zwischen Schnappnase 20 und Gehäuseteil 3 mittels Luftspalte 22 und 23 freigemacht. Die Halteelemente 17 des zweiten Typs dagegen sind starre Vorsprünge Schnappnasen 24, die direkt aus der Wand 25 des unteren Gehäuses 3 hervorstehen.

Figuren 1 und 2: Die Halteelemente 16 und 17 sind um die Aufnahme 9 herum angeordnet. Die Aufnahme 9 ist durch die Halteelemente 16 und 17 in einer axialen Richtung formschlüssig hintergriffen, indem in jedes der Fenster 13 jeweils eines der Halteelemente 16 oder 17 formschlüssig radial ein greift und somit die Seitenwand 11 in eine Richtung an jeweils einer Kante 26 des Fensters 13 hintergreift.

Figuren 1 und 2: Das Lageorientierungsmittel ist an dem zweiten Typ der Halteelemente 17 orientiert, indem die Abflachungen 14 Fenstern 13a zugeordnet sind, in die am montierten Federbeinlager 1 die Schnappnasen 24 verrastet sind.

### Bezugszeichen

| | | | |
|---|---|---|---|
| 1 | Federbeinlager | 21 | Hebel |
| 2 | Schwenkachse | 22 | Luftspalt |
| 3 | unteres Gehäuseteil | 23 | Luftspalt |
| 4 | oberes Gehäuseteil | 24 | Schnappnase |
| 5 | Wälzlager | 25 | Wand |
| 6 | Dichtung | 26 | Kante |
| 7 | Dichtung | | |
| 8 | Federauflage | | |
| 8a | Windung | | |
| 9 | Aufnahme | | |
| 10 | Boden | | |
| 11 | Seitenwand | | |
| 12 | Rand | | |
| 13 | Fenster | | |
| 14 | Abflachung | | |
| 15 | Öffnung | | |
| 16 | Halteelement | | |
| 17 | Halteelement | | |
| 18 | Vorsprung | | |
| 19 | Innenkante | | |
| 20 | Schnappnase | | |

## Patentansprüche

1. Federbeinlager mit einer Federauflage an einem Gehäuseteil aus Kunststoff und einer napfförmigen Aufnahme für einen Anschlagpuffer, wobei die napfförmige Aufnahme in axialer Richtung zumindest teilweise in das Gehäuseteil hineingesteckt und radial geführt an dem Gehäuseteil gehalten ist, **dadurch gekennzeichnet, dass** an dem Gehäuseteil (3) einzelne Halteelemente (16, 17) ausgebildet sind, wobei die Halteelemente (16, 17) um die Aufnahme (9) herum angeordnet sind und die Aufnahme (9) durch die Halteelemente (16, 17) in einer axialen Richtung formschlüssig hintergriffen ist.

2. Federbeinlager nach Anspruch 1, **dadurch gekennzeichnet, dass** die Aufnahme (9) radial ausgerichtete Fenster (13) aufweist, wobei jeweils mindestens eines der Halteelemente (16, 17) formschlüssig in eines der Fenster (13) radial eingreift.

3. Federbeinlager nach Anspruch 1, **dadurch gekennzeichnet, dass** das Gehäuseteil (3) mindestens einen ersten Typ radial nachgiebiger Halteelemente (16) und einen zweiten Typ radial starrer Halteelemente (17) aufweist.

4. Federbeinlager nach Anspruch 3, **dadurch gekennzeichnet, dass** die Halteelemente (16) des ersten Typs jeweils durch mindestens eine Schnappnase (20) gebildet sind, die an einem elastisch nachgiebigen Hebel (21) ausgebildet ist, wobei die jeweilige Schnappnasen (20) mittels des einseitig an dem Gehäuseteil (3) festen Hebels (21) elastisch nachgiebig mit dem Gehäuseteil (21) verbunden ist.

5. Federbeinlager nach Anspruch 4, **dadurch gekennzeichnet, dass** der Hebel (21) in Umfangsrichtung und in radialer Richtung gegenüber dem Gehäuseteil (3) frei beweglich ist.

6. Federbeinlager nach Anspruch 3, **dadurch gekennzeichnet, dass** das Halteelement (17) des zweiten Typs ein starr aus dem Gehäuseteil (3) hervorstehender radialer Vorsprung (18) ist.

7. Federbeinlager nach Anspruch 3, **dadurch gekennzeichnet, dass** die Aufnahme (9) wenigstens ein Lageorientierungsmittel zum orientierten Einbau der Aufnahme (9) in das Gehäuseteil aufweist.

8. Federbeinlager nach Anspruch 7, **dadurch gekennzeichnet, dass** das Lageorientierungsmittel an einem Typ der Halteelemente (17) orientiert ist.

9. Federbeinlager nach Anspruch 4, **dadurch gekennzeichnet, dass** das Lageorientierungsmittel durch mindestens eine zur axialen Richtung quer verlaufende Abflachung (14) an der napfförmigen Aufnahme (9) gebildet ist.

10. Federbeinlager nach Anspruch 8, **dadurch gekennzeichnet, dass** sich zwei der Abflachungen (14) parallel gegenüberliegen.

11. Federbeinlager nach Anspruch 1, **dadurch gekennzeichnet, dass** die die Aufnahme (9) wenigstens ein Lageorientierungsmittel zum orientierten Einbau des Federbeinlagers (1) in eine Federbeinanordnung aufweist.

12. Federbeinlager nach Anspruch 11, **dadurch gekennzeichnet, dass** das Gehäuseteil (3) mindestens einen ersten Typ radial nachgiebiger Halteelemente (16) und einen zweiten Typ radial starrer Halteelemente (17) aufweist, wobei das Lageorientierungsmittel an einem Typ der Halteelemente (17) orientiert ist und dabei die Halteelemente (16) des ersten Typs jeweils durch mindestens eine Schnappnase (20) gebildet sind, die an einem elastisch nachgiebigen Hebel (21) ausgebildet ist, und wobei die jeweilige Schnappnasen (20) mittels des einseitig an dem Gehäuseteil (3) festen Hebels (21) elastisch nachgiebig mit dem Gehäuseteil (3) verbunden ist und das Halteelement (17) des zweiten Typs ein starr aus dem Gehäuseteil (3) hervorstehender radialer Vorsprung (18) ist.

13. Federbeinlager nach Anspruch 12, **dadurch gekennzeichnet, dass** der Hebel (21) in Umfangsrichtung und in radialer Richtung gegenüber dem Gehäuseteil (3) freigemacht ist.

14. Federbeinlager nach Anspruch 12, **dadurch gekennzeichnet, dass** das Lageorientierungsmittel an wenigstens einem Halteelement (17) des zweiten Typs orientiert ist.
